# EUROPÄISCHE PATENTSCHRIFT

(11) **EP 3 237 898 B1**
(45) Veröffentlichungstag und Bekanntmachung des Hinweises auf die Patenterteilung: **01.05.2019**
(21) Anmeldenummer: 15807655.4
(22) Anmeldetag: 08.12.2015
(51) Int. Cl.: G01N 27/407

(54) **VERFAHREN ZUM HERSTELLEN EINER GASSENSORVORRICHTUNG ZUM ERFASSEN ZUMINDEST EINES GASFÖRMIGEN ANALYTEN IN EINEM MESSMEDIUM SOWIE VERFAHREN UND GASSENSORVORRICHTUNG ZUM ERFASSEN ZUMINDEST EINES GASFÖRMIGEN ANALYTEN IN EINEM MESSMEDIUM**
METHOD OF MANUFACTURING A GAS SENSOR DEVICE FOR DETERMINING AT LEAST ONE GASEOUS SAMPLE IN A MEASUREMENT MEDIUM, AS WELL AS METHOD AND GAS SENSOR DEVICE FOR DETERMINING AT LEAST ONE GASEOUS SAMPLE IN A MEASUREMENT MEDIUM
PROCÉDÉ POUR LA FABRICATION D'UN DISPOSITIF DETECTEUR DE GAZ POUR DÉTECTER AU MOINS UN ANALYTE GAZEUX DANS UN FLUIDE DE MESURE, AINSI PROCÉDÉ ET DISPOSITIF DETECTEUR DE GAZ POUR DÉTECTER AU MOINS UN ANALYTE GAZEUX DANS UN FLUIDE DE MESURE

(30) Priorität: 22.12.2014 DE 102014226804
(43) Veröffentlichungstag der Anmeldung: 01.11.2017
(73) Patentinhaber: Robert Bosch GmbH, 70442 Stuttgart (DE)
(72) Erfinder: LIEMERSDORF, Dirk, 74343 Sachsenheim (DE); KUNZ, Denis, 74199 Untergruppenbach (DE)
(86) Internationale Anmeldenummer: PCT/EP2015/078959
(87) Internationale Veröffentlichungsnummer: WO 2016/102183

(56) Entgegenhaltungen:
- EP-A1- 2 312 307
- WO-A1-2012/154029
- US-A- 4 668 374
- US-A1- 2013 277 217

## Beschreibung

### Stand der Technik

Die vorliegende Erfindung bezieht sich auf ein Verfahren zum Herstellen einer Gassensorvorrichtung zum Erfassen zumindest eines gasförmigen Analyten in einem Messmedium, auf eine Gassensorvorrichtung zum Erfassen zumindest eines gasförmigen Analyten in einem Messmedium, auf ein Verfahren zum Erfassen zumindest eines gasförmigen Analyten in einem Messmedium, auf eine entsprechende Vorrichtung sowie auf ein entsprechendes Computerprogramm.

Es können keramische Stickoxidsensoren, beispielsweise Zirkonoxid-basierte Sensoren, insbesondere in Kraftfahrzeugen eingesetzt werden, um Abgasnachbehandlungssysteme zu überwachen bzw. zu regeln. Dabei können Sensorelemente mittels Dickschichttechnologie gefertigt werden, wobei Abmessungen lediglich beispielsweise ca. 4 Millimeter mal 50 Millimeter mal 3 Millimeter betragen können. Aufgrund solcher Abmessungen, d. h. aufgrund der thermischen Masse, können zum Erreichen einer notwendigen Betriebstemperatur, beispielsweise ca. 700 Grad Celsius, Heizleistungen im einstelligen bis zweistelligen Wattbereich typisch sein. Die DE 10 2012 201304 A1 offenbart eine mikromechanische Feststoffelektrolyt-Sensorvorrichtung und ein entsprechendes Herstellungsverfahren.

Aus der US 2013/0277217 A1 ist ein mittels Mikrobearbeitung gefertigter Dünnfilm-Gassensor bekannt, mit zwei miteinander verbundenen Untereinheiten und einem Membranstapel zum Messen einer Zielgaskonzentration.

Die US 4,668,374 offenbart einen Gassensor und ein Verfahren zum Fertigen desselben, wobei der Gassensor mittels einer Mikroelektronik-Fertigungstechnik hergestellt ist und mehrere Dünnfilm-Festelektrolyt-Zellen zum Pumpen und Erfassen in einer hermetisch abgedichteten Sensorkammer aufweist.

### Offenbarung der Erfindung

Vor diesem Hintergrund werden mit dem hier vorgestellten Ansatz ein Verfahren zum Herstellen einer Gassensorvorrichtung zum Erfassen zumindest eines gasförmigen Analyten in einem Messmedium, eine Gassensorvorrichtung zum Erfassen zumindest eines gasförmigen Analyten in einem Messmedium, ein Verfahren zum Erfassen zumindest eines gasförmigen Analyten in einem Messmedium, weiterhin eine Vorrichtung, die dieses Verfahren verwendet, sowie schließlich ein entsprechendes Computerprogramm gemäß den Hauptansprüchen vorgestellt. Vorteilhafte Ausgestaltungen ergeben sich aus den jeweiligen Unteransprüchen und der nachfolgenden Beschreibung.

Gemäß Ausführungsformen der vorliegenden Erfindung kann ein mikroelektrochemischer Gassensor, insbesondere ein mikroelektrochemischer Stickoxidsensor bzw. ein halbleiterbasierter, mittels Mikrosystemtechnik gefertigter Dünnschicht-Gassensor bzw. Stickoxidsensor bzw. Zweikammer-Stickoxidsensor bereitgestellt werden. So können beispielsweise Halbleitersubstrate mikrosystemtechnisch bearbeitet werden, um einen solchen Sensor zu fertigen, bzw. kann ein solcher Sensor aus mikrosystemtechnisch bearbeiteten Halbleitersubstraten gefertigt sein. Hierbei kann auch ein Funktionsprinzip mit sauerstoffionenleitender Funktionskeramik sowie mit mehreren Kammern realisiert werden.

Vorteilhafterweise können gemäß Ausführungsformen der vorliegenden Erfindung hinsichtlich eines solchen Gassensors insbesondere geometrische Abmessungen, ein Heizleistungsbedarf sowie Herstellungskosten reduziert werden, da ein solcher Gassensor mittels Mikrosystemtechnik auf Basis eines Halbleitersubstrates realisiert werden kann. Es können ein hoher Miniaturisierungsgrad und eine vorteilhafte Nutzung von Standardprozessen der Halbleitertechnologie bei einer Herstellung eines solchen Gassensors erzielt werden. Aufgrund reduzierter geometrischer Abmessungen kann insbesondere verglichen mit einem herkömmlichen keramischen Dickschicht-Sensor eine Verringerung einer zu heizenden thermischen Masse erreicht werden. Somit kann ein reduzierter Heizleistungsbedarf während eines Sensorbetriebs realisiert werden. Eine Fertigung eines solchen Gassensors in Halbleitertechnologie kann insbesondere bei hohen Stückzahlen einen Kostenvorteil gegenüber einer herkömmlicherweise verwendeten Dickschichttechnologie bieten, insbesondere wenn mehrere Sensorfunktionen auf einem Sensorelement integriert werden, beispielsweise im Falle zusätzlich integrierter Druckerfassung, Partikelerfassung, Lambdasensorik etc. Es kann aufgrund der Miniaturisierung und der standardisierten Halbleiterprozesse auch ein gesteigerter Fertigungsnutzen gegenüber einem Siebdruckverfahren erreicht werden.

Es wird ein Verfahren zum Herstellen einer Gassensorvorrichtung zum Erfassen zumindest eines gasförmigen Analyten in einem Messmedium vorgestellt, wobei das Verfahren die Schritte des unabhängigen Anspruchs 1 aufweist.

Die Gassensorvorrichtung kann ausgebildet sein, um zumindest einen gasförmigen Analyten qualitativ und zusätzlich oder alternativ quantitativ zu erfassen. Der zumindest eine gasförmige Analyt kann beispielsweise Sauerstoff und zusätzlich oder alternativ Stickoxide umfassen. Insbesondere kann die Gassensorvorrichtung als ein Stickoxidsensor ausgeführt sein. Dabei kann die Gassensorvorrichtung beispielsweise für eine Abgassensorik in Kraftfahrzeugen, für eine Abgassensorik in beispielsweise stationären Heizanlagen, für Brandmeldesysteme, für eine Gassensorik in mobilen elektronischen Geräten, wie beispielsweise Mobiltelefonen, für eine Atemgasanalyse, für eine industrielle Prozessüberwachung etc. eingesetzt werden. Insbesondere kann die Gassensorvorrichtung beispielsweise in Kraftfahrzeugen eingesetzt werden und ausgebildet sein, um Abgasnachbehandlungssysteme zu überwachen bzw. zu regeln. Bei dem Messmedium kann es sich um ein Abgas bzw. Abgasgemisch eines Kraftfahrzeugs, Umgebungsluft oder dergleichen handeln. Die Halbleitersubstrate können aus Materialien ausgeformt sein, die mittels Prozessen aus dem Bereich der Halbleiterbearbeitung bearbeitet werden können. Die Festelektrolytschichten können ein Ionen leitendes, beispielsweise keramisches Material aufweisen, insbesondere ein Sauerstoffionen leitendes Keramikmaterial. Im Schritt des Bearbeitens kann der zumindest eine Trennprozess ein Trenchen, Ätzen etc. aufweisen und kann der zumindest eine Beschichtungsprozess Pulsed-Laser-Deposition (PLD), Sputtern, Atomic-Layer-Deposition (ALD), nasschemische Depositionsverfahren etc. aufweisen. Im Schritt des Zusammenfügens können die Halbleitersubstrate so zusammengefügt werden, dass aus zumindest einer Teilmenge der Ausnehmungsabschnitte die Einstellkammer, die Erfassungskammer und der Diffusionsabschnitt gebildet werden. Im Schritt des Zusammenfügens kann insbesondere eine stoffschlüssige Verbindung zwischen den Halbleitersubstraten hergestellt werden. Alternativ können hochtemperaturstabile, hermetisch siegelnde Gläser zur Verbindung und Abdichtung der Halbleitersubstrate zum Einsatz kommen.

Gemäß einer Ausführungsform werden im Schritt des Bearbeitens an dem ersten Halbleitersubstrat und zusätzlich oder alternativ an dem zweiten Halbleitersubstrat eine Einstelleinrichtung mit einer ersten Festelektrolytschicht zwischen einem ersten Elektrodenpaar zum Einstellen einer Gaszusammensetzung des Messmediums hinsichtlich eines Begleitgases, eine Bestimmungseinrichtung mit einer zweiten Festelektrolytschicht zwischen einem zweiten Elektrodenpaar zum Bestimmen eines Gehalts des Begleitgases in dem Messmedium und eine Erfassungseinrichtung mit einer dritten Festelektrolytschicht zwischen einem dritten Elektrodenpaar zum Erfassen des gasförmigen Analyten erzeugt. Hierbei sind die Bestimmungseinrichtung, die Einstelleinrichtung und die Erfassungseinrichtung galvanisch voneinander getrennt angeordnet, sodass in einem zusammengefügten Zustand des ersten Halbleitersubstrats und des zweiten Halbleitersubstrats die Bestimmungseinrichtung und Einstelleinrichtung als Wandabschnitte der Einstellkammer ausgeformt sind und die Erfassungseinrichtung als ein Wandabschnitt der Erfassungskammer ausgeformt ist. Der zumindest eine gasförmige Analyt kann beispielsweise Stickoxide umfassen und das Begleitgas kann Sauerstoff sein. Auch können die Bestimmungseinrichtung, die Einstelleinrichtung und die Erfassungseinrichtung Nernstzellen bzw. Pumpzellen repräsentieren. Eine solche Ausführungsform bietet den Vorteil, dass zum einen der Analyt auch indirekt über das Begleitgas erfasst werden kann und zum anderen eine besonders genaue und unaufwendige Erfassung des zumindest einen gasförmigen Analyten ermöglicht wird. Im Gegensatz zu einem Dickschicht-Stickoxidsensor, dessen Substrat- bzw. Bulkmaterial aus Ionen leitendem Zirkondioxid bestehen kann, können die die Bestimmungseinrichtung, die Einstelleinrichtung und die Erfassungseinrichtung aufgrund ihrer galvanisch voneinander getrennten Anordnung voneinander entkoppelt angesteuert werden, was zu einer erhöhten Signalqualität eines Sensorsignals der Gassensorvorrichtung führen kann.

Auch kann im Schritt des Bearbeitens eine gemeinsame elektrische Signalleitung an der Einstellkammer und der Erfassungskammer zugewandt angeordneten Elektroden angeschlossen werden. Ferner können hierbei eigene elektrische Signalleitungen an von der Einstellkammer und der Erfassungskammer abgewandt angeordneten Elektroden angeschlossen werden. Eine solche Ausführungsform bietet den Vorteil, dass durch die gemeinsame Signalleitung ein Verkabelungsaufwand der Gassensorvorrichtung verringert werden kann.

Zudem kann im Schritt des Bearbeitens zumindest eine Temperiereinrichtung zum Temperieren der Festelektrolytschichten und zusätzlich oder alternativ der Elektroden in einem Bereich des ersten Halbleitersubstrats und zusätzlich oder alternativ in einem Bereich des zweiten Halbleitersubstrats angeordnet werden. Die zumindest eine Temperiereinrichtung kann als ein mikrosystemtechnischer Membranheizer ausgeführt sein. Somit braucht aufgrund einer reduzierten thermischen Masse der Gassensorvorrichtung nicht die gesamte Gassensorvorrichtung auf eine Betriebstemperatur beheizt zu werden, sondern es reicht vorteilhafterweise aus, einzelne Nernst- bzw. Pumpzellen bzw. die Bestimmungseinrichtung, die Einstelleinrichtung und die Erfassungseinrichtung lokal mittels der zumindest einen Temperiereinrichtung auf Betriebstemperatur zu bringen. Hohe Temperaturen können beispielsweise nur im Inneren der Gassensorvorrichtung auftreten, eine Peripherie derselben kann hingegen aufgrund der geringen thermischen Masse beispielsweise lediglich geringfügig mit aufgeheizt werden. Dadurch kann eine Anwendung der Gassensorvorrichtung von Applikationen mit ohnehin heißen Umgebungen, wie beispielsweise der Abgassensorik, erweitert werden und kann der Einsatz einer solchen Gassensorvorrichtungen in weiteren Anwendungsfeldern, wie beispielsweise der Brandsensorik, der industriellen Prozessüberwachung, der Gassensorik in Mobiltelefonen oder der Medizintechnik ermöglicht werden.

Ferner kann im Schritt des Bearbeitens eine Auswerteeinrichtung in einem Bereich des ersten Halbleitersubstrats und zusätzlich oder alternativ in einem Bereich des zweiten Halbleitersubstrats integriert werden. Hierdurch kann eine Signalqualität weiter verbessert werden, indem Zuleitungslängen von den Elektroden zu der Auswerteeinrichtung verkürzt werden. Im Falle von Anwendungen mit moderaten Umgebungstemperaturen kann die Auswerteeinrichtung bzw. Auswerteelektronik entweder in die Gassensorvorrichtung, insbesondere direkt auf einem Sensorchip derselben, integriert werden oder alternativ benachbart zu der Gassensorvorrichtung angeordnet werden.

Es wird ferner eine Gassensorvorrichtung zum Erfassen zumindest eines gasförmigen Analyten in einem Messmedium vorgestellt, wobei die Gassensorvorrichtung die Merkmale des unabhängigen Anspruchs 5 aufweist.

Die Gassensorvorrichtung kann durch Ausführen einer Ausführungsform des vorstehend genannten Verfahrens hergestellt sein.

Gemäß einer Ausführungsform kann das erste Halbleitersubstrat einen ersten Ausnehmungsabschnitt für die Einstellkammer, einen zweiten Ausnehmungsabschnitt für die Erfassungskammer, einen dritten Ausnehmungsabschnitt für den Diffusionsabschnitt zwischen dem ersten Ausnehmungsabschnitt und dem zweiten Ausnehmungsabschnitt, einen vierten Ausnehmungsabschnitt für eine Zutrittsöffnung zu der Einstellkammer für das Messmedium, eine Einstelleinrichtung mit einer ersten Festelektrolytschicht zwischen einem ersten Elektrodenpaar zum Einstellen einer Gaszusammensetzung des Messmediums hinsichtlich eines Begleitgases, wobei die Einstelleinrichtung als ein Wandabschnitt der Einstellkammer in dem ersten Ausnehmungsabschnitt ausgeformt ist, und einen fünften Ausnehmungsabschnitt für die Einstelleinrichtung aufweisen. Ferner kann dabei das zweite Halbleitersubstrat einen sechsten Ausnehmungsabschnitt für die Einstellkammer, einen siebten Ausnehmungsabschnitt für die Erfassungskammer, eine Bestimmungseinrichtung mit einer zweiten Festelektrolytschicht zwischen einem zweiten Elektrodenpaar zum Bestimmen eines Gehalts eines Begleitgases in dem Messmedium, wobei die Bestimmungseinrichtung als ein Wandabschnitt der Einstellkammer in dem sechsten Ausnehmungsabschnitt ausgeformt ist, eine Erfassungseinrichtung mit einer dritten Festelektrolytschicht zwischen einem dritten Elektrodenpaar zum Erfassen des gasförmigen Analyten, wobei die Erfassungseinrichtung als ein Wandabschnitt der Erfassungskammer in dem siebten Ausnehmungsabschnitt ausgeformt ist, einen achten Ausnehmungsabschnitt für die Bestimmungseinrichtung und einen neunten Ausnehmungsabschnitt für die Erfassungseinrichtung aufweisen. Eine solche Ausführungsform bietet den Vorteil, dass eine besonders Platz sparende bzw. miniaturisierte, kostengünstig und in großer Stückzahl herstellbare Gassensorvorrichtung mit hoher Erfassungsgenauigkeit bereitgestellt werden kann.

Es wird auch ein Verfahren zum Erfassen zumindest eines gasförmigen Analyten in einem Messmedium vorgestellt, wobei das Verfahren folgende Schritte aufweist:
Bereitstellen einer Ausführungsform der vorstehend genannten Gassensorvorrichtung;
Bestimmen eines Gehalts eines Begleitgases des Messmediums in der Einstellkammer;
Einstellen einer Gaszusammensetzung des Messmediums in der Einstellkammer hinsichtlich des Begleitgases; und
Erfassen des gasförmigen Analyten in dem in die Erfassungskammer diffundierten Messmedium.

Das Verfahren kann somit in Verbindung mit einer Ausführungsform der vorstehend genannten Gassensorvorrichtung vorteilhaft ausgeführt werden, um zumindest einen gasförmigen Analyten in einem Messmedium zu erfassen.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Gemäß Ausführungsformen der vorliegenden Erfindung kann eine Ausführungsform der vorstehend genannten Gassensorvorrichtung in Mikrosystemtechnik als Plattform bzw. Grundbaustein verwendet werden, um weitere Sensorfunktionen, wie beispielsweise Druckerfassung, Partikelerfassung, Lambda-Sensorik, Kohlenwasserstofferfassung etc. auf einem einzigen Chip zu integrieren und kombiniert auszuwerten.

Der hier vorgestellte Ansatz wird nachstehend anhand der beigefügten Zeichnungen beispielhaft näher erläutert. Es zeigen:
Figuren 1 bis 4G schematische Schnittdarstellungen einer Gassensorvorrichtung gemäß einem Ausführungsbeispiel der vorliegenden Erfindung; und
Figuren 5 und 6 Ablaufdiagramme von Verfahren gemäß Ausführungsbeispielen der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

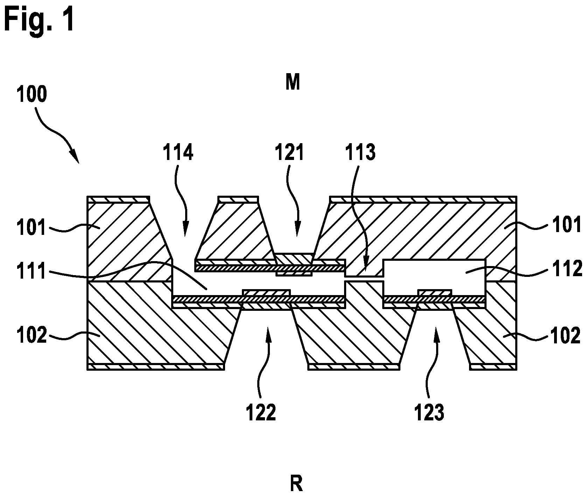

Fig. 1 zeigt eine schematische Schnittdarstellung einer Gassensorvorrichtung 100 gemäß einem Ausführungsbeispiel der vorliegenden Erfindung. Die Gassensorvorrichtung 100 ist ausgebildet, um zumindest einen gasförmigen Analyten in einem Messmedium M zu erfassen. Dabei ist die Gassensorvorrichtung 100 ausgebildet, um beispielsweise Stickoxide in einem Abgas eines Kraftfahrzeugs zu erfassen. Somit umfasst hierbei der zumindest eine gasförmige Analyt beispielhaft Stickoxide.

Gemäß dem in Fig. 1 dargestellten Ausführungsbeispiel der vorliegenden Erfindung ist die Gassensorvorrichtung 100 teilweise in dem Messmedium M angeordnet und teilweise in einem Referenzmedium R bzw. in Referenzluft, beispielsweise Umgebungsluft, angeordnet. Dabei ist die Gassensorvorrichtung 100 an einem Einsatzort so anordenbar, dass eine erste Seite der Gassensorvorrichtung 100 dem Messmedium M zugewandt ist und eine zweite Seite der Gassensorvorrichtung 100 dem Referenzmedium R zugewandt ist. Alternativ kann das Referenzmedium auch als geschlossener oder teilweise geschlossener Referenzraum ausgeführt werden.

Die Gassensorvorrichtung 100 weist ein erstes Halbleitersubstrat 101 und ein zweites Halbleitersubstrat 102 auf. Das erste Halbleitersubstrat 101 und das zweite Halbleitersubstrat 102 sind beispielsweise aus Silizium ausgeformt. Dabei sind das erste Halbleitersubstrat 101 und das zweite Halbleitersubstrat 102 zusammengefügt bzw. stoffschlüssig miteinander verbunden, beispielsweise durch Bonden, Waferbonden, Kleben oder dergleichen. Lediglich beispielhaft ist hierbei das erste Halbleitersubstrat 101 dem Messmedium M zugewandt oder zuwendbar angeordnet und ist das zweite Halbleitersubstrat 102 dem Referenzmedium R zugewandt oder zuwendbar angeordnet.

In der Gassensorvorrichtung 100 ist eine Einstellkammer 111 angeordnet bzw. ausgeformt. Die Einstellkammer 111 ist ausgebildet, um eine Gaszusammensetzung des Messmediums M einzustellen bzw. eine Einstellung der Gaszusammensetzung des Messmediums M zu ermöglichen. Auch ist in der Gassensorvorrichtung 100 eine Erfassungskammer 112 angeordnet bzw. ausgeformt. Die Erfassungskammer 112 ist ausgebildet, um den gasförmigen Analyten zu erfassen bzw. eine Erfassung des gasförmigen Analyten zu ermöglichen. Ferner ist in der Gassensorvorrichtung 100 ein Diffusionsabschnitt 113 bzw. eine Diffusionsbarriere angeordnet bzw. ausgeformt. Der Diffusionsabschnitt 113 ist ausgebildet, um eine Diffusion des Messmediums M zwischen der Einstellkammer 111 und der Erfassungskammer 112 zu steuern. Somit sind Einstellkammer 111 und die Erfassungskammer 112 mittels des Diffusionsabschnittes 113 fluidisch miteinander verbunden. Bei dem Diffusionsabschnitt 113 handelt es sich um einen Spalt oder dergleichen in einer Wand zwischen der Einstellkammer 111 und der Erfassungskammer 112. Zudem ist in der Gassensorvorrichtung 100 eine Zutrittsöffnung 114 für einen Zutritt des Messmediums M bzw. für einen Gaszutritt in die Einstellkammer 111 angeordnet bzw. ausgeformt. Somit ist die Einstellkammer 111 über die Zutrittsöffnung 114 für das Messmedium M zugänglich. Die Zutrittsöffnung 114 kann hierbei so ausgeführt werden, dass sie ebenfalls als Diffusionsbarriere wirkt.

Die Einstellkammer 111, die Erfassungskammer 112 und der Diffusionsabschnitt 113 sind zwischen den zusammengefügten Halbleitersubstraten 101 und 102 angeordnet. Dabei sind die Einstellkammer 111, die Erfassungskammer 112 und der Diffusionsabschnitt 113 unter Verwendung zumindest eines Trennprozesses erzeugt, insbesondere eines den Prozesses aus dem Bereich der Halbleitertechnologie, Mikrobearbeitung etc.

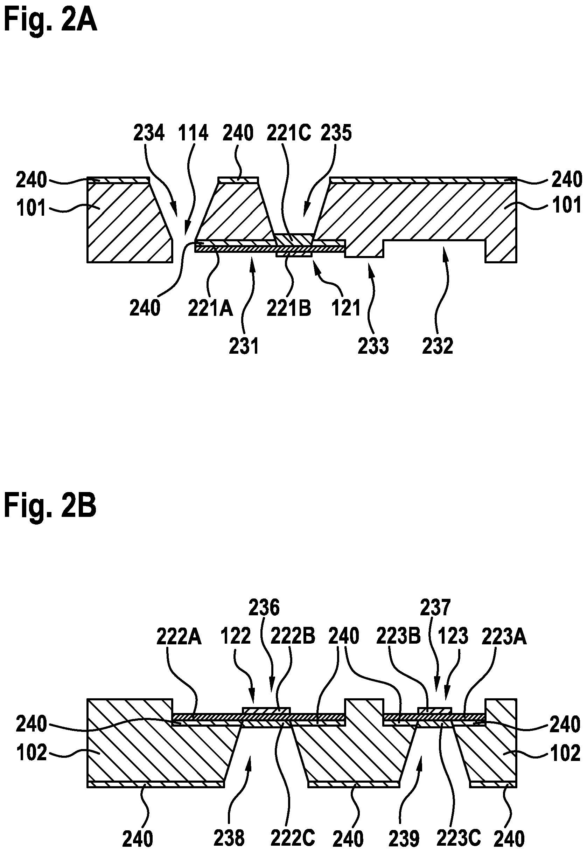

Ferner weist die Gassensorvorrichtung 100 unter Verwendung zumindest eines Trennprozesses und zumindest eines Beschichtungsprozesses erzeugte Ausnehmungsabschnitte, Festelektrolytschichten und Elektroden auf, die unter Bezugnahme auf die Gassensorvorrichtung 100 gemäß dem in Fig. 1 dargestellten Ausführungsbeispiel der vorliegenden Erfindung nachfolgend auch unter Bezugnahme auf die Figuren 2A bis 4G detaillierter beschrieben sind.

An dem ersten Halbleitersubstrat 101 ist eine Einstelleinrichtung 121 angeordnet bzw. erzeugt. Hierbei ist die Einstelleinrichtung 121 als ein Wandabschnitt der Einstellkammer 111 ausgeformt. Die Einstelleinrichtung 121 weist eine erste Festelektrolytschicht und ein erstes Elektrodenpaar auf. Dabei ist die erste Festelektrolytschicht zwischen dem ersten Elektrodenpaar angeordnet. Die Einstelleinrichtung 121 ist ausgebildet, um eine Gaszusammensetzung des Messmediums M in der Einstellkammer 111 hinsichtlich eines Begleitgases in dem Messmedium M einzustellen.

An dem zweiten Halbleitersubstrat 102 ist eine Bestimmungseinrichtung 122 angeordnet bzw. erzeugt. Hierbei ist die Bestimmungseinrichtung 122 als ein weiterer Wandabschnitt der Einstellkammer 111 ausgeformt. Die Bestimmungseinrichtung 122 weist eine zweite Festelektrolytschicht und ein zweites Elektrodenpaar auf. Dabei ist die zweite Festelektrolytschicht zwischen dem zweiten Elektrodenpaar angeordnet. Die Bestimmungseinrichtung 122 ist ausgebildet, um einen Gehalt des Begleitgases in dem Messmedium M in der Einstellkammer 111 zu bestimmen.

Auch ist an dem zweiten Halbleitersubstrat 102 eine Erfassungseinrichtung 123 angeordnet bzw. erzeugt. Hierbei ist die Erfassungseinrichtung 123 als ein Wandabschnitt der Erfassungskammer 112 ausgeformt. Die Erfassungseinrichtung 123 weist eine dritte Festelektrolytschicht und ein drittes Elektrodenpaar auf. Dabei ist die dritte Festelektrolytschicht zwischen dem dritten Elektrodenpaar angeordnet. Die Erfassungseinrichtung 123 ist ausgebildet, um den gasförmigen Analyten in der Erfassungskammer 112 zu erfassen.

Somit weist die Gassensorvorrichtung 100 auch die Einstelleinrichtung 121, die Bestimmungseinrichtung 122 und die Erfassungseinrichtung 123 auf. Dabei sind die Einstelleinrichtung 121, die Bestimmungseinrichtung 120 und die Erfassungseinrichtung 123 voneinander galvanisch getrennt angeordnet.

Gemäß einem Ausführungsbeispiel kann die Gassensorvorrichtung 100 zumindest eine Temperiereinrichtung zum Temperieren der Festelektrolytschichten und zusätzlich oder alternativ der Elektroden aufweisen. Eine solche Temperiereinrichtung kann in einem Bereich des ersten Halbleitersubstrats 101 und zusätzlich oder alternativ in einem Bereich des zweiten Halbleitersubstrats 102 angeordnet sein. Optional kann die Gassensorvorrichtung 100 auch eine Auswerteeinrichtung zum Auswerten von Signalen von der Einstelleinrichtung 121, der Bestimmungseinrichtung 122 und der Erfassungseinrichtung 123 aufweisen. Eine solche Auswerteeinrichtung kann in einem Bereich des ersten Halbleitersubstrats 101 und zusätzlich oder alternativ in einem Bereich des zweiten Halbleitersubstrats 102 integriert bzw. angeordnet sein.

Gemäß einem Ausführungsbeispiel kann die Gassensorvorrichtung 100 eine gemeinsame elektrische Signalleitung, die an der Einstellkammer und der Erfassungskammer zugewandt angeordneten Elektroden anschließbar ist, und eine Mehrzahl von einzelnen elektrischen Signalleitungen aufweisen, die an von der Einstellkammer und der Erfassungskammer abgewandt angeordneten Elektroden anschließbar sind.

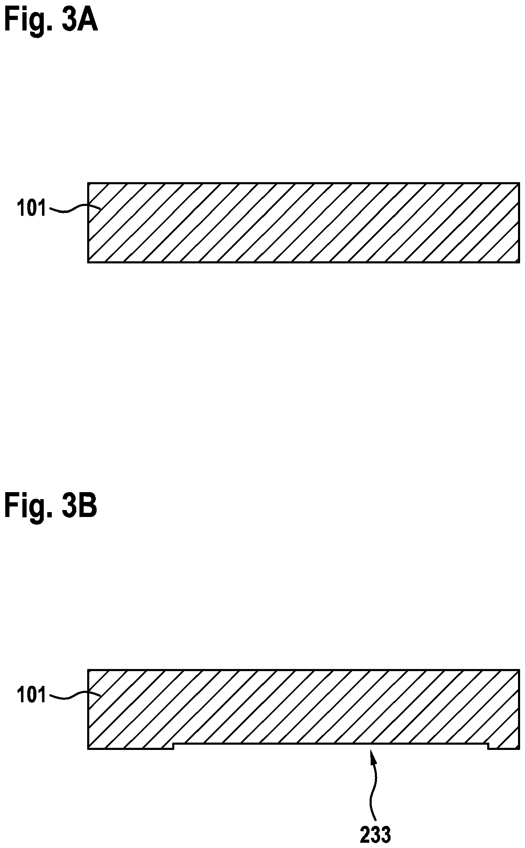

Fig. 2A zeigt eine schematische Schnittdarstellung des ersten Halbleitersubstrats 101 der Gassensorvorrichtung aus Fig. 1. Hierbei ist das erste Halbleitersubstrat 101 getrennt von dem zweiten Halbleitersubstrat der Gassensorvorrichtung dargestellt. Auch ist das erste Halbleitersubstrat 101 in Fig. 2A detaillierter gezeigt. Darstellungen hinsichtlich Herstellungsschritten des ersten Halbleitersubstrats 101 sind unter Bezugnahme auf Figuren 3A bis 3H gezeigt und näher beschrieben.

In Fig. 2A sind von der Einstelleinrichtung 121 die erste Festelektrolytschicht 221A und das erste Elektrodenpaar mit einer auf Seiten der Einstellkammer an der ersten Festelektrolytschicht 221A angeordneten ersten Innenelektrode 221B und einer auf Seiten des Messmediums an der ersten Festelektrolytschicht 221A angeordneten ersten Außenelektrode 221C gezeigt.

Von einer mit dem zweiten Halbleitersubstrat verbindbaren Seite des ersten Halbleitersubstrats 101 her sind in dem ersten Halbleitersubstrat 101 ein erster Ausnehmungsabschnitt 231 für die Einstellkammer, ein zweiter Ausnehmungsabschnitt 232 für die Erfassungskammer und zwischen dem ersten Ausnehmungsabschnitt 231 und dem zweiten Ausnehmungsabschnitt 232 ein dritter Ausnehmungsabschnitt 233 für den Diffusionsabschnitt ausgeformt bzw. erzeugt, beispielsweise durch Trenchen und Ätzen.

Von einer dem Messmedium zuwendbaren Seite des ersten Halbleitersubstrats 101 her sind in dem ersten Halbleitersubstrat 101 ein vierter Ausnehmungsabschnitt 234 für die Zutrittsöffnung 114 zu der Einstellkammer und ein fünfter Ausnehmungsabschnitt 235 für die Einstelleinrichtung 121 ausgeformt bzw. erzeugt, beispielsweise durch Trenchen und Ätzen. Dabei sind der vierte Ausnehmungsabschnitt 234 und der fünfte Ausnehmungsabschnitt 235 bezogen auf eine Haupterstreckungsebene des ersten Halbleitersubstrats 101 im Bereich des ersten Ausnehmungsabschnittes 231 angeordnet.

Die Einstelleinrichtung 121 ist in dem ersten Ausnehmungsabschnitt 231 und dem fünften Ausnehmungsabschnitt 235 als ein Wandabschnitt der Einstellkammer angeordnet bzw. erzeugt, beispielsweise durch Abscheiden der ersten Festelektrolytschicht 221A und der ersten Innenelektrode 221B von Seiten des ersten Ausnehmungsabschnittes 231 aus sowie Abscheiden der ersten Außenelektrode 221C von Seiten des fünften Ausnehmungsabschnittes 235 aus.

Ferner sind in Fig. 2A eine Mehrzahl von Teilabschnitten zumindest einer Ätzstoppschicht 240 der Gassensorvorrichtung im Bereich des ersten Halbleitersubstrats 101 gezeigt. Dabei ist die Ätzstoppschicht 240 auf einer dem Messmedium zuwendbaren Seite des ersten Halbleitersubstrats 101 außerhalb eines Bereichs der Ausnehmungsabschnitte 234 und 235 an dem ersten Halbleitersubstrat 101 angeordnet bzw. aufgebracht. Ferner ist die Ätzstoppschicht 240 auf einer mit dem zweiten Halbleitersubstrat verbindbaren Seite des ersten Halbleitersubstrats 101 mit Ausnahme eines Bereichs der ersten Außenelektrode 221C zwischen der ersten Festelektrolytschicht 221A und dem ersten Halbleitersubstrat 101 angeordnet bzw. aufgebracht.

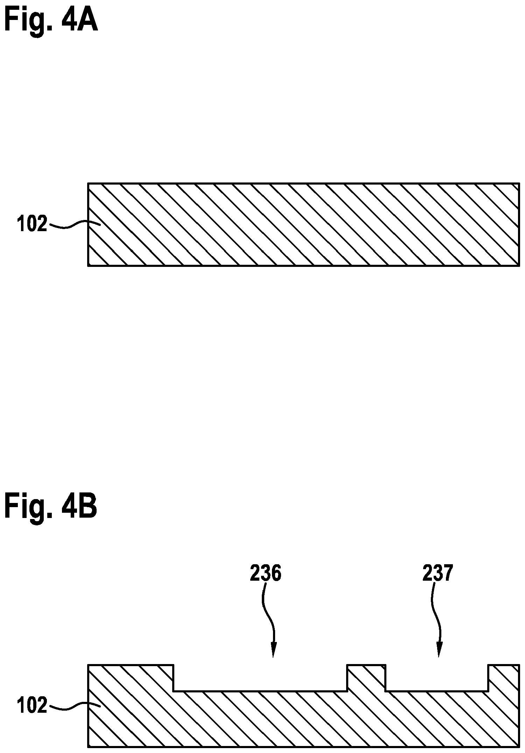

Fig. 2B zeigt eine schematische Schnittdarstellung des zweiten Halbleitersubstrats 102 der Gassensorvorrichtung aus Fig. 1. Hierbei ist das zweite Halbleitersubstrat 102 getrennt von dem ersten Halbleitersubstrat der Gassensorvorrichtung dargestellt. Auch ist das zweite Halbleitersubstrat 102 in Fig. 2B detaillierter gezeigt. Darstellungen hinsichtlich Herstellungsschritten des zweiten Halbleitersubstrats 102 sind unter Bezugnahme auf Figuren 4A bis 4G gezeigt und näher beschrieben.

In Fig. 2B sind von der Bestimmungseinrichtung 122 die zweite Festelektrolytschicht 222A und das zweite Elektrodenpaar mit einer auf Seiten der Einstellkammer an der zweiten Festelektrolytschicht 222A angeordneten zweiten Innenelektrode 222B und einer auf Seiten des Referenzmediums an der zweiten Festelektrolytschicht 222A angeordneten zweiten Außenelektrode 222C gezeigt. Ferner sind von der Erfassungseinrichtung 123 die dritte Festelektrolytschicht 223A und das dritte Elektrodenpaar mit einer auf Seiten der Erfassungskammer an der dritten Festelektrolytschicht 223A angeordneten dritten Innenelektrode 223B und einer auf Seiten des Referenzmediums an der dritten Festelektrolytschicht 223A angeordneten dritten Außenelektrode 223C dargestellt.

Von einer mit dem ersten Halbleitersubstrat verbindbaren Seite des zweiten Halbleitersubstrats 102 her sind in dem zweiten Halbleitersubstrat 102 ein sechster Ausnehmungsabschnitt 236 für die Einstellkammer und ein siebter Ausnehmungsabschnitt 237 für die Erfassungskammer ausgeformt bzw. erzeugt, beispielsweise durch Trenchen und Ätzen.

Von einer dem Referenzmedium zuwendbaren Seite des zweiten Halbleitersubstrats 102 her sind in dem zweiten Halbleitersubstrat 102 ein achter Ausnehmungsabschnitt 238 für die Bestimmungseinrichtung 122 und ein neunter Ausnehmungsabschnitt 239 für die Erfassungseinrichtung 123 ausgeformt bzw. erzeugt, beispielsweise durch Trenchen und Ätzen. Dabei ist der achte Ausnehmungsabschnitt 238 bezogen auf eine Haupterstreckungsebene des zweiten Halbleitersubstrats 102 im Bereich des sechsten Ausnehmungsabschnittes 236 angeordnet, wobei der neunter Ausnehmungsabschnitt 239 bezogen auf eine Haupterstreckungsebene des zweiten Halbleitersubstrats 102 im Bereich des siebten Ausnehmungsabschnittes 237 angeordnet ist.

Die Bestimmungseinrichtung 122 ist in dem sechsten Ausnehmungsabschnitt 236 und dem achten Ausnehmungsabschnitt 238 als ein Wandabschnitt der Einstellkammer angeordnet bzw. erzeugt, beispielsweise durch Abscheiden der zweiten Festelektrolytschicht 222A und der zweiten Innenelektrode 222B von Seiten des sechsten Ausnehmungsabschnittes 236 aus sowie Abscheiden der zweiten Außenelektrode 222C von Seiten des achten Ausnehmungsabschnittes 238 aus.

Die Erfassungseinrichtung 123 ist in dem siebten Ausnehmungsabschnitt 237 und dem neunten Ausnehmungsabschnitt 239 als ein Wandabschnitt der Erfassungskammer angeordnet bzw. erzeugt, beispielsweise durch Abscheiden der dritten Festelektrolytschicht 223A und der dritten Innenelektrode 223B von Seiten des siebten Ausnehmungsabschnittes 237 aus sowie Abscheiden der dritten Außenelektrode 223C von Seiten des neunten Ausnehmungsabschnittes 239 aus.

Ferner sind in Fig. 2B eine Mehrzahl von Teilabschnitten zumindest einer Ätzstoppschicht 240 der Gassensorvorrichtung im Bereich des zweiten Halbleitersubstrats 102 gezeigt. Dabei ist die Ätzstoppschicht 240 auf einer dem Referenzmedium zuwendbaren Seite des zweiten Halbleitersubstrats 102 außerhalb eines Bereichs der Ausnehmungsabschnitte 238 und 239 an dem zweiten Halbleitersubstrat 102 angeordnet bzw. aufgebracht. Ferner ist die Ätzstoppschicht 240 auf einer mit dem ersten Halbleitersubstrat verbindbaren Seite des zweiten Halbleitersubstrats 102 mit Ausnahme eines Bereichs der zweiten Außenelektrode 222C zwischen der zweiten Festelektrolytschicht 222A und dem zweiten Halbleitersubstrat 102 sowie mit Ausnahme eines Bereichs der dritten Außenelektrode 223C zwischen der dritten Festelektrolytschicht 223A und dem zweiten Halbleitersubstrat 102 angeordnet bzw. aufgebracht.

Das in Fig. 2A gezeigte erste Halbleitersubstrat 101 und das in Fig. 2B gezeigte zweite Halbleitersubstrat 102 sind zusammenfügbar bzw. verbindbar, um die in Fig. 1 gezeigte Gassensorvorrichtung bereitzustellen. Somit ist durch Zusammenfügen beider Halbleitersubstrate 101 und 102 bzw. Chiphälften eine als Dünnschicht-Stickoxid-Sensorchip ausgeführte Gassensorvorrichtung herstellbar.

Figuren 3A bis 3H zeigen Schnittdarstellungen hinsichtlich Verfahrensschritten einer Herstellung bzw. hinsichtlich Herstellungszuständen des ersten Halbleitersubstrats 101 aus Fig. 2A.

Fig. 3A zeigt dabei eine Schnittdarstellung des ersten Halbleitersubstrats 101 in einem unbearbeiteten Zustand. Das erste Halbleitersubstrat 101 ist beispielsweise aus Silizium ausgeformt.

Fig. 3B zeigt eine Schnittdarstellung des ersten Halbleitersubstrats 101 aus Fig. 3A mit dem dritten Ausnehmungsabschnitt 233, der durch Mikrostrukturierung, beispielsweise mittels Trenchen, in dem ersten Halbleitersubstrat 101 ausgeformt ist. Dabei weist der dritte Ausnehmungsabschnitt 233 eine erste Ausnehmungstiefe auf.

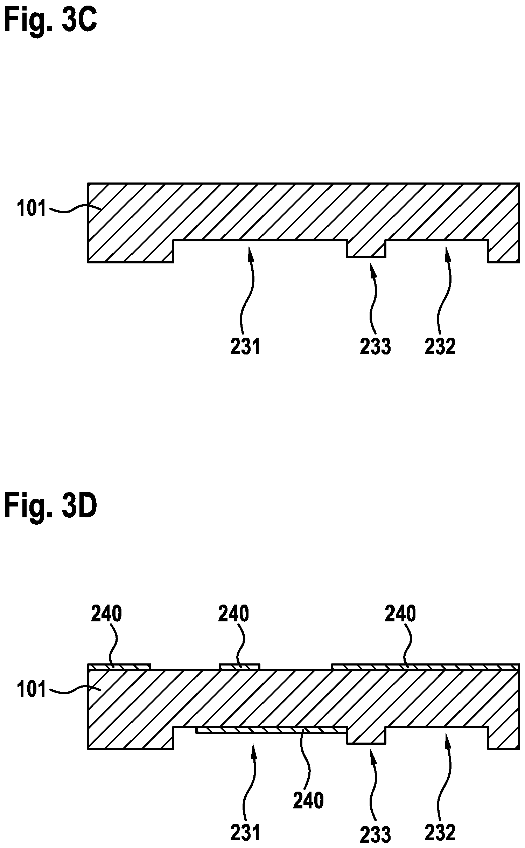

Fig. 3C zeigt eine Teilschnittdarstellung des ersten Halbleitersubstrats 101 aus Fig. 3B mit dem ersten Ausnehmungsabschnitt 231 und dem zweiten Ausnehmungsabschnitt 232, die durch Mikrostrukturierung, beispielsweise mittels Trenchen, in dem ersten Halbleitersubstrat 101 ausgeformt sind. Der erste Ausnehmungsabschnitt 231 und der zweite Ausnehmungsabschnitt 232 weisen dabei eine zweite Ausnehmungstiefe auf, die größer als die erste Ausnehmungstiefe des dritten Ausnehmungsabschnittes 233 ist.

Fig. 3D zeigt eine Schnittdarstellung des ersten Halbleitersubstrats 101 aus Fig. 3C mit den Teilabschnitten der zumindest einen Ätzstoppschicht 240, die beispielsweise durch Abscheiden und Strukturieren auf Teilbereiche von Oberflächen des ersten Halbleitersubstrats 101 aufgebracht ist. Die zumindest eine Ätzstoppschicht 240 weist beispielsweise Siliziumnitrid (Si₃N₄) auf.

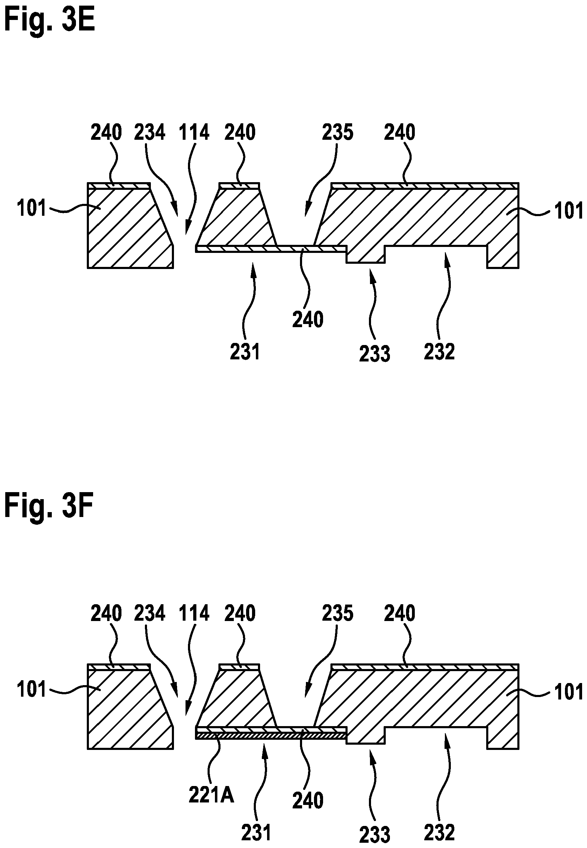

Fig. 3E zeigt eine Schnittdarstellung des ersten Halbleitersubstrats 101 aus Fig. 3D mit dem vierten Ausnehmungsabschnitt 234 und dem fünften Ausnehmungsabschnittes 235, die beispielsweise durch Ätzen in dem ersten Halbleitersubstrat 101 ausgeformt sind. Hierbei sind der vierte Ausnehmungsabschnitt 234 und der fünfte Ausnehmungsabschnitt 235 unter Verwendung der zumindest einen Ätzstoppschicht 240 geätzt. Insbesondere sind der vierte Ausnehmungsabschnitt 234 und der fünfte Ausnehmungsabschnitt 235 in diesem Ausführungsbeispiel mittels KOH-Ätzen erzeugt. Alternativ kann der vierte Ausnehmungsabschnitt 234 und/oder der fünfte Ausnehmungsabschnitt 235 auch getrennt werden. Zwischen dem ersten Ausnehmungsabschnitt 231 und dem fünften Ausnehmungsabschnitt 235 ist ein Teilabschnitt der Ätzstoppschicht 240 als Hilfsmembran angeordnet. Genau gesagt ist der erste Ausnehmungsabschnitt 231 durch den Teilabschnitt der Ätzstoppschicht 240 bzw. die Hilfsmembran von dem fünften Ausnehmungsabschnitt 235 getrennt.

Anders ausgedrückt grenzen der erste Ausnehmungsabschnitt 231 und der fünfte Ausnehmungsabschnitt 235 an den Teilabschnitt der Ätzstoppschicht 240 bzw. die Hilfsmembran an.

Fig. 3F zeigt eine Schnittdarstellung des ersten Halbleitersubstrats 101 aus Fig. 3E mit der ersten Festelektrolytschicht 221A, die auf Seiten des ersten Ausnehmungsabschnittes 231 an dem Teilabschnitt der Ätzstoppschicht 240 bzw. der Hilfsmembran abgeschieden ist. Hierbei ist die erste Festelektrolytschicht 221A beispielsweise mittels Pulsed-Laser-Deposition (PLD), Sputtern oder dergleichen abgeschieden. Die erste Festelektrolytschicht 221A weist beispielsweise eine Ionen leitende, Yttrium-dotierte Zirconiumoxid- bzw. ZrO₂-Keramik (YSZ) auf.

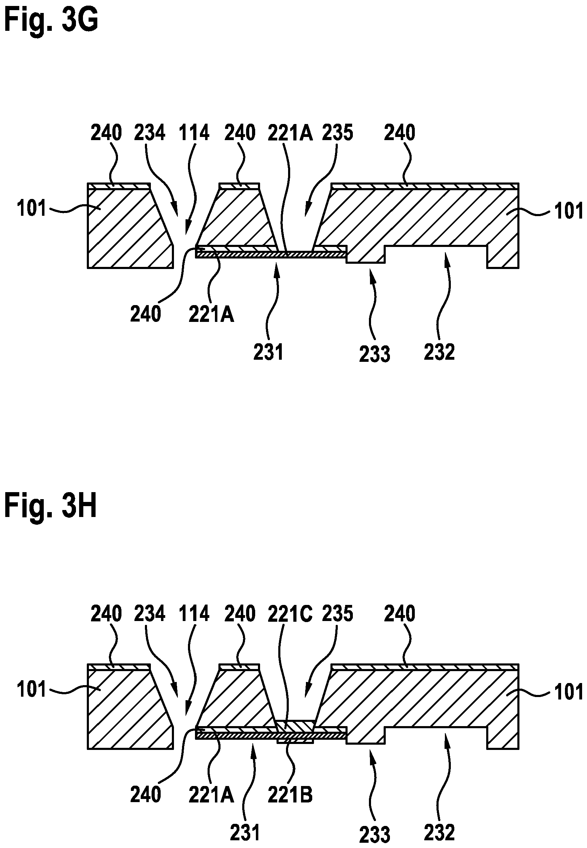

Fig. 3G zeigt eine Schnittdarstellung des ersten Halbleitersubstrats 101 aus Fig. 3F, wobei der Teilabschnitt der Ätzstoppschicht 240 bzw. die Hilfsmembran von der ersten Festelektrolytschicht 221A teilweise entfernt bzw. beseitigt ist. Genau gesagt ist der Teilabschnitt der Ätzstoppschicht 240 bzw. die Hilfsmembran in einem Bereich des fünften Ausnehmungsabschnittes 235 von der ersten Festelektrolytschicht 221A entfernt.

Fig. 3H zeigt eine Schnittdarstellung des ersten Halbleitersubstrats 101 aus Fig. 3G mit der ersten Innenelektrode 221B und der ersten Außenelektrode 221C, die an der ersten Festelektrolytschicht 221A abgeschieden sind. Dabei ist die erste Innenelektrode 221B auf Seiten des ersten Ausnehmungsabschnittes 231 an der ersten Festelektrolytschicht 221A angeordnet, wobei die erste Außenelektrode 221C auf Seiten des fünften Ausnehmungsabschnittes 235 an der ersten Festelektrolytschicht 221A angeordnet ist. Das in Fig. 3H gezeigte erste Halbleitersubstrat 101 entspricht hierbei dem ersten Halbleitersubstrat aus Fig. 2A.

Figuren 4A bis 4G zeigen Schnittdarstellungen hinsichtlich Verfahrensschritten einer Herstellung bzw. hinsichtlich Herstellungszuständen des zweiten Halbleitersubstrats 102 aus Fig. 2B.

Fig. 4A zeigt dabei eine Schnittdarstellung des zweiten Halbleitersubstrats 102 in einem unbearbeiteten Zustand. Das zweite Halbleitersubstrat 102 ist beispielsweise aus Silizium ausgeformt.

Fig. 4B zeigt eine Schnittdarstellung des zweiten Halbleitersubstrats 102 aus Fig. 4A mit dem sechsten Ausnehmungsabschnitt 236 und dem siebten Ausnehmungsabschnitt 237, die durch Mikrostrukturierung, beispielsweise mittels Trenchen, in dem zweiten Halbleitersubstrat 102 ausgeformt sind.

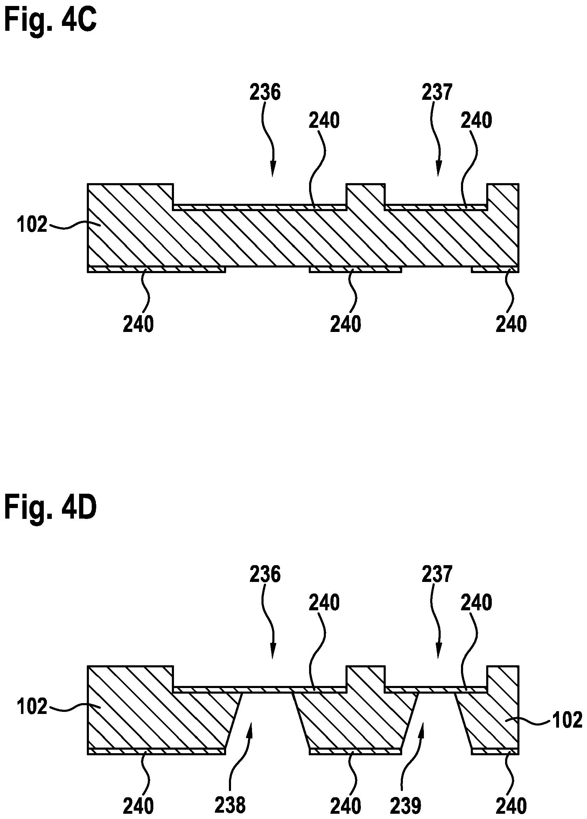

Fig. 4C zeigt eine Schnittdarstellung des zweiten Halbleitersubstrats 102 aus Fig. 4B mit den Teilabschnitten der zumindest einen Ätzstoppschicht 240, die beispielsweise durch Abscheiden und Strukturieren auf Teilbereiche von Oberflächen des zweiten Halbleitersubstrats 102 aufgebracht ist. Die zumindest eine Ätzstoppschicht 240 weist beispielsweise Siliziumnitrid (Si₃N₄) auf.

Fig. 4D zeigt eine Schnittdarstellung des zweiten Halbleitersubstrats 102 aus Fig. 4C mit dem achten Ausnehmungsabschnitt 238 und dem neunten Ausnehmungsabschnittes 239, die beispielsweise durch Ätzen in dem zweiten Halbleitersubstrat 102 ausgeformt sind. Hierbei sind der achte Ausnehmungsabschnitt 238 und der neunte Ausnehmungsabschnitt 239 unter Verwendung der zumindest einen Ätzstoppschicht 240 geätzt. Insbesondere sind der achte Ausnehmungsabschnitt 238 und der neunte Ausnehmungsabschnitt 239 mittels KOH-Ätzen erzeugt. Zwischen dem sechsten Ausnehmungsabschnitt 236 und dem achten Ausnehmungsabschnitt 238 sowie zwischen dem siebten Ausnehmungsabschnitt 237 und dem neunten Ausnehmungsabschnitt 239 ist jeweils ein Teilabschnitt der Ätzstoppschicht 240 als Hilfsmembran angeordnet. Genau gesagt sind der sechste Ausnehmungsabschnitt 236 und der achte Ausnehmungsabschnitt 238 sowie der siebte Ausnehmungsabschnitt 237 und der neunte Ausnehmungsabschnitt 239 durch den jeweiligen Teilabschnitt der Ätzstoppschicht 240 bzw. die jeweilige Hilfsmembran voneinander getrennt. Anders ausgedrückt grenzen der sechste Ausnehmungsabschnitt 236 und der achte Ausnehmungsabschnitt 238 an einen Teilabschnitt der Ätzstoppschicht 240 bzw. eine Hilfsmembran an und grenzen der siebte Ausnehmungsabschnitt 237 und der neunte Ausnehmungsabschnitt 239 an einen weiteren Teilabschnitt der Ätzstoppschicht 240 bzw. eine weitere Hilfsmembran an.

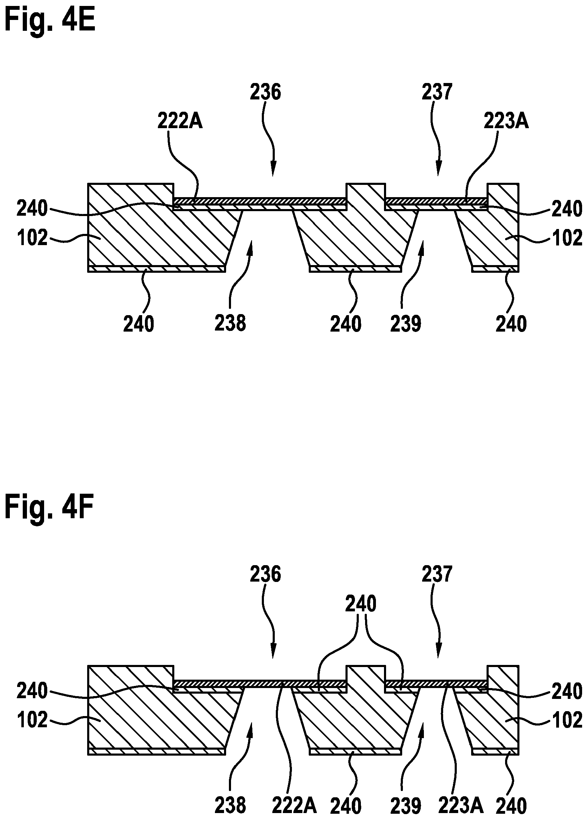

Fig. 4E zeigt eine Schnittdarstellung des zweiten Halbleitersubstrats 102 aus Fig. 4D mit der zweiten Festelektrolytschicht 222A, die auf Seiten des sechsten Ausnehmungsabschnittes 236 an dem Teilabschnitt der Ätzstoppschicht 240 bzw. der Hilfsmembran abgeschieden ist, und der dritten Festelektrolytschicht 223A, die auf Seiten des siebten Ausnehmungsabschnittes 237 an dem weiteren Teilabschnitt der Ätzstoppschicht 240 bzw. der weiteren Hilfsmembran abgeschieden ist. Hierbei sind die zweite Festelektrolytschicht 222A und die dritte Festelektrolytschicht 223A beispielsweise mittels Pulsed-Laser-Deposition (PLD), Sputtern oder dergleichen abgeschieden. Die zweite Festelektrolytschicht 222A und die dritte Festelektrolytschicht 223A weisen beispielsweise eine Ionen leitende, Yttrium-dotierte Zirconiumoxid- bzw. ZrO₂-Keramik (YSZ) auf.

Fig. 4F zeigt eine Schnittdarstellung des zweiten Halbleitersubstrats 102 aus Fig. 4E, wobei die Teilabschnitte der Ätzstoppschicht 240 bzw. die Hilfsmembranen von der zweiten Festelektrolytschicht 222A und der dritten Festelektrolytschicht 223A teilweise entfernt bzw. beseitigt sind. Genau gesagt ist der Teilabschnitt der Ätzstoppschicht 240 bzw. die Hilfsmembran in einem Bereich des achten Ausnehmungsabschnittes 238 von der zweiten Festelektrolytschicht 222A entfernt, wobei der weitere Teilabschnitt der Ätzstoppschicht 240 bzw. die weitere Hilfsmembran in einem Bereich des neunten Ausnehmungsabschnittes 239 von der dritten Festelektrolytschicht 223A entfernt ist.

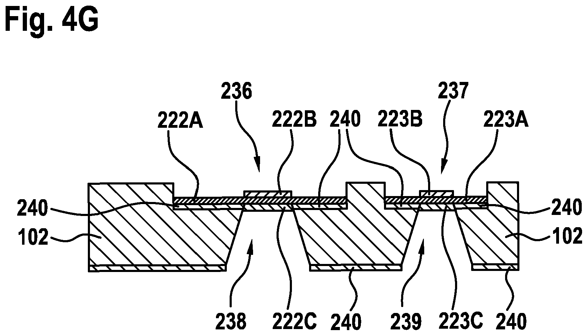

Fig. 4G zeigt eine Schnittdarstellung des zweiten Halbleitersubstrats 102 aus Fig. 4F mit der zweiten Innenelektrode 222B und der zweiten Außenelektrode 222C, die an der zweiten Festelektrolytschicht 222A abgeschieden sind, sowie der dritten Innenelektrode 223B und der dritten Außenelektrode 223C, die an der dritten Festelektrolytschicht 223A abgeschieden sind. Dabei ist die zweite Innenelektrode 222B auf Seiten des sechsten Ausnehmungsabschnittes 236 an der zweiten Festelektrolytschicht 222A angeordnet, wobei die zweite Außenelektrode 222C auf Seiten des achten Ausnehmungsabschnittes 238 an der zweiten Festelektrolytschicht 222A angeordnet ist. Ferner ist die dritte Innenelektrode 223B auf Seiten des siebten Ausnehmungsabschnittes 237 an der dritten Festelektrolytschicht 223A angeordnet, wobei die dritte Außenelektrode 223C auf Seiten des neunten Ausnehmungsabschnittes 239 an der dritten Festelektrolytschicht 223A angeordnet ist. Das in Fig. 4G gezeigte zweite Halbleitersubstrat 102 entspricht hierbei dem zweiten Halbleitersubstrat aus Fig. 2B.

Unter Bezugnahme auf die Figuren 1 bis 4G ist eine als Dünnschicht-NOx-Sensor ausgeführte Gassensorvorrichtung 100 gemäß einem Ausführungsbeispiel der vorliegenden Erfindung gezeigt und beschrieben. Der halbleiterbasierte Dünnschicht-NOx-Sensor bzw. die Gassensorvorrichtung 100 ist hierbei aus zwei Halbleitersubstraten 101 und 102 bzw. Mikrochips aufgebaut. Herstellung und Betrieb einer solchen Gassensorvorrichtung 100 werden nachfolgend unter Bezugnahme auf die Figuren 1 bis 4G erläutert.

Mittels typischer Mikrostrukturierungsprozesse, z. B. Trenchen, KOH-Ätzen etc. werden in den Halbleitersubstraten 101 und 102 geeignete Ausnehmungsabschnitte 231 bis 239 bzw. Kavitäten hergestellt. Für die Halbleitersubstrate 101 und 102 können beispielsweise Silizium (Si), Siliziumcarbid (SiC), Galliumarsenid (GaAs), Galliumnitrid (GaN) sowie andere Materialien verwendet werden, die mittels Prozessen aus der Halbleitertechnologie bearbeitbar sind. Eine Sensorfunktion beruht auf einer Ionen leitenden, Yttrium-dotierten ZrO₂-Keramik (YSZ) für die Festelektrolytschichten 221A, 222A und 223A, die als Dünnschicht abgeschieden sind bzw. werden. Mögliche Abscheideverfahren umfassen beispielsweise Pulsed-Laser-Deposition (PLD), Sputtern, Atomic-Layer- Deposition (ALD) oder dergleichen. Elektrodenmaterialien für die Elektroden 221B, 221C, 222B, 222C, 223B und 223C umfassen beispielsweise Verbindungen aus Pt, Rh, Au, Re, Hf, Zr etc., wobei eine Abscheidung zum Beispiel mittels Sputterverfahren bzw. nasschemischer Depositionsverfahren erfolgt.

Beide Halbleitersubstrate 101 und 102 werden mittels Waferbonden, z. B. Si-Direktbonden, zusammengefügt. Dabei werden die Einstellkammer 111, die Erfassungskammer 112 und der Diffusionsabschnitt 113 erzeugt. Ein dünner Spalt als Diffusionsabschnitt 113 zwischen der Einstellkammer 111 und der Erfassungskammer 112 fungiert hierbei als Diffusionsbarriere. Der achte Ausnehmungsabschnitt 238 und der neunte Ausnehmungsabschnitt 239 können als Referenzluftkammern ausgeführt sein. Solche Referenzluftkammern können ähnlich einer herkömmlichen Lambdasonde als echte Referenz, d. h. mit Referenzluftkanal, oder geschlossen als gepumpte Referenz ausgeführt sein.

Für einen Betrieb der Gassensorvorrichtung 100 bzw. für einen Sensorbetrieb können die innerhalb der Kammern 111 und 112 angeordneten Elektroden, d. h. die Innenelektroden 221B, 222B und 223B, zusammengeschaltet werden, sodass lediglich eine gemeinsame Signalleitung zur elektrischen Kontaktierung desselben benötigt wird. Die außerhalb der Kammern 111 und 112 angeordneten Elektroden, d. h. die Außenelektroden 221C, 222C und 223C, werden jeweils mit einer eigenen Leitung angeschlossen. In Summe ergeben sich somit für den die Elektroden der Gassensorvorrichtung 100 lediglich vier Signalleitungen. Hinzu können zwei weitere Signalleitungen kommen, die für eine Ansteuerung eines Heizers bzw. eine Temperiereinrichtung verwendet werden. Hierbei kann die Gassensorvorrichtung 100 als Ganzes beheizt werden oder es können mittels beispielsweise dreier parallel oder seriell geschalteter Membranheizer lediglich die als Nernstzellen bzw. Pumpzellen ausgeführte Einstelleinrichtung 121, Bestimmungseinrichtung 122 und Erfassungseinrichtung 123 beheizt werden. Die Gassensorvorrichtung 100 weist geometrische Abmessungen von beispielsweise ca. 3 Millimeter mal 3 Millimeter mal 1 Millimeter auf.

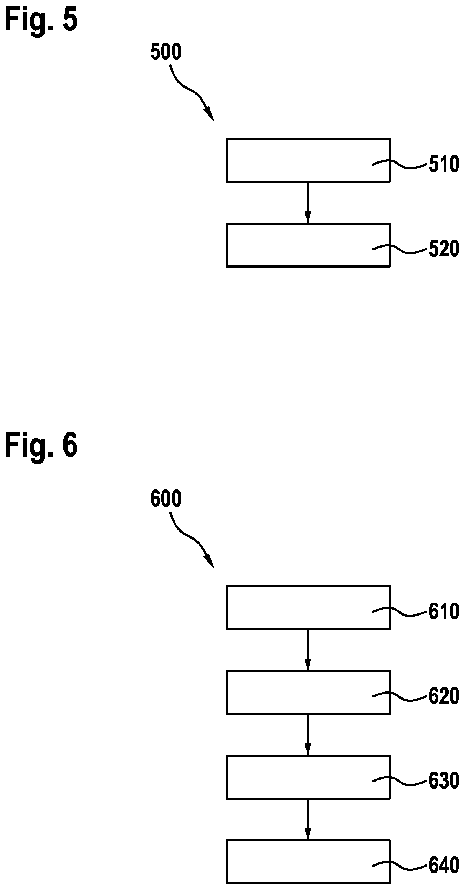

Beim Erfassen von Stickoxiden als gasförmige Analyten, wie es beispielsweise unter Bezugnahme auf Fig. 6 beschrieben ist, gelangt das Messmedium M bzw. das zu messende Gas über die Zutrittsöffnung 114 bzw. eine freigeätzte Öffnung in dem ersten Halbleitersubstrat 101 in die Einstellkammer 111. Hier kann anhand einer Nernst-Spannung zwischen der zweiten Innenelektrode 222B und der zweiten Außenelektrode 222C der Bestimmungseinrichtung 122 ein aktuell in der Einstellkammer 111 vorliegender Gehalt an Sauerstoff als Begleitgas gemessen werden. Durch Anlegen einer Pumpspannung an die erste Innenelektrode 221B, die selektiv für O₂ empfindlich ist, z. B. Au-Pt-Cermet, und die erste Außenelektrode 221B kann Sauerstoff aus der Einstellkammer 111 heraus bzw. die Einstellkammer 111 hineingepumpt werden. Die Pumpspannung wird beispielsweise so geregelt, dass möglichst konstant ein niedriger Sauerstoffgehalt in der Einstellkammer 111 vorliegt. Über den als dünnen Spalt ausgeführten Diffusionsabschnitt 113 zwischen der Einstellkammer 111 und der Erfassungskammer 112, der als Diffusionsbarriere dient, gelangt das hinsichtlich des Sauerstoffgehaltes eingestellte Messmedium M in die Erfassungskammer 112. An der dritten Innenelektrode 223B, die z. B. aus Pt-Rh-Cermet ausgeformt ist, werden aufgrund ihrer katalytischen Aktivität in der Erfassungskammer 112 vorliegende Stickoxide in Stickstoff und Sauerstoff zersetzt und wird vorliegender molekularer Sauerstoff in atomaren Sauerstoff zersetzt. Durch Anlegen einer Pumpspannung an die dritte Innenelektrode 223B und die dritte Außenelektrode 223C wird der Sauerstoff aus der Erfassungskammer 112 entfernt. Da eine Konzentration an molekularem Sauerstoff als Begleitgas aus der Einstellkammer 112 auf einen Sollwert eingestellt und bekannt ist, kann anhand des Pumpstroms zwischen der dritten Innenelektrode 223B und der dritten aus Elektrode 223C auf eine Konzentration der Stickoxide im Messmedium M rückgeschlossen werden.

Fig. 5 zeigt ein Ablaufdiagramm eines Verfahrens 500 gemäß einem Ausführungsbeispiel der vorliegenden Erfindung. Bei dem Verfahren 500 handelt es sich um ein Verfahren zum Herstellen einer Gassensorvorrichtung zum Erfassen zumindest eines gasförmigen Analyten in einem Messmedium. Durch Ausführen des Verfahrens 500 ist eine Gassensorvorrichtung wie die Gassensorvorrichtung aus den Figuren 1 bis 4G herstellbar. Insbesondere ergeben sich hierbei zumindest eine Teilmenge der in Figuren 3A bis 4G dargestellten Herstellungszustände, wenn das Verfahren 500 ausgeführt wird.

In einem Schritt 510 werden ein erstes Halbleitersubstrat und ein zweites Halbleitersubstrate unter Verwendung zumindest eines Trennprozesses und zumindest eines Beschichtungsprozesses bearbeitet, um Ausnehmungsabschnitte, Festelektrolytschichten und Elektroden in dem ersten Halbleitersubstrat und dem zweiten Halbleitersubstrat zu erzeugen.

In einem nachfolgenden Schritt 520 werden das erste Halbleitersubstrat und das zweite Halbleitersubstrat zusammengefügt, um zwischen dem ersten Halbleitersubstrat und dem zweiten Halbleitersubstrat eine Einstellkammer zum Einstellen einer Gaszusammensetzung des Messmediums, eine Erfassungskammer zum Erfassen des gasförmigen Analyten und einen Diffusionsabschnitt zum Steuern einer Diffusion des Messmediums zwischen der Einstellkammer und der Erfassungskammer zu erzeugen.

Fig. 6 zeigt ein Ablaufdiagramm eines Verfahrens 600 gemäß einem Ausführungsbeispiel der vorliegenden Erfindung. Bei dem Verfahren 600 handelt es sich um ein Verfahren zum Erfassen zumindest eines gasförmigen Analyten in einem Messmedium. Das Verfahren 600 ist in Verbindung mit einer Gassensorvorrichtung wie der Gassensorvorrichtung aus den Figuren 1 bis 4G vorteilhaft ausführbar.

In einem Schritt 610 wird eine Gassensorvorrichtung wie die Gassensorvorrichtung aus den Figuren 1 bis 4G bereitgestellt. In einem nachfolgenden Schritt 620 wird ein Gehalt eines Begleitgases des Messmediums in der Einstellkammer der Gassensorvorrichtung bestimmt. Dann wird in einem folgenden Schritt 630 eine Gaszusammensetzung des Messmediums in der Einstellkammer hinsichtlich des Begleitgases eingestellt. Danach wird in einem Schritt 640 der gasförmige Analyt in dem in die Erfassungskammer diffundierten Messmedium erfasst.

Eine Funktion einer als Zirkonoxid-basierter Stickoxid-Sensor ausgeführter Gassensorvorrichtung, die als ein Zwei-Kammer-System ausgeführt ist, beruht beispielsweise unter anderem auf einer Sauerstoffionen-Leitfähigkeit der ZrO₂-Keramik der Festelektrolytschichten. In der Einstellkammer wird mit Hilfe selektiver Pump- und einer Messelektroden eine Sauerstoffkonzentration auf einen möglichst konstanten, niedrigen Wert geregelt. Über einen Diffusionsabschnitt gelangt das Gasgemisch des Messmediums in die Erfassungskammer. An der dortigen Innenelektrode werden die im Gasgemisch enthaltenen Stickoxide zersetzt. Der dabei frei werdende Sauerstoff wird zusammen mit dem in der Einstellkammer eingestellten Sauerstoffgehalt abgepumpt. Der resultierende Pumpstrom ist direkt proportional zur Stickoxid-Konzentration im Messmedium und dient somit als Sensorsignal.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (500) zum Herstellen einer Gassensorvorrichtung (100) zum Erfassen zumindest eines gasförmigen Analyten in einem Messmedium (M), wobei das Verfahren (500) folgende Schritte aufweist:
Bearbeiten (510) eines ersten Halbleitersubstrats (101) und eines zweiten Halbleitersubstrats (102) unter Verwendung zumindest eines Trennprozesses und zumindest eines Beschichtungsprozesses, um Ausnehmungsabschnitte (231, 232, 233, 234, 235, 236, 237, 238, 239), Festelektrolytschichten (221A, 222A, 223A) und Elektroden (221B, 221C, 222B, 222C, 223B, 223C) in dem ersten Halbleitersubstrat (101) und dem zweiten Halbleitersubstrat (102) zu erzeugen, wobei im Schritt (510) des Bearbeitens an dem ersten Halbleitersubstrat (101) und/oder an dem zweiten Halbleitersubstrat (102) eine Einstelleinrichtung (121) mit einer ersten Festelektrolytschicht (221A) zwischen einem ersten Elektrodenpaar (221B, 221C) zum Einstellen einer Gaszusammensetzung des Messmediums (M) hinsichtlich eines Begleitgases, eine Bestimmungseinrichtung (122) mit einer zweiten Festelektrolytschicht (222A) zwischen einem zweiten Elektrodenpaar (222B, 222C) zum Bestimmen eines Gehalts des Begleitgases in dem Messmedium (M) und eine Erfassungseinrichtung (123) mit einer dritten Festelektrolytschicht (223A) zwischen einem dritten Elektrodenpaar (223B, 223C) zum Erfassen des gasförmigen Analyten erzeugt werden, wobei die Bestimmungseinrichtung (122), die Einstelleinrichtung (121) und die Erfassungseinrichtung (123) galvanisch voneinander getrennt angeordnet werden, sodass in einem zusammengefügten Zustand des ersten Halbleitersubstrats (101) und des zweiten Halbleitersubstrats (102) die Bestimmungseinrichtung (122) und die Einstelleinrichtung (121) als Wandabschnitte einer Einstellkammer (111) ausgeformt sind und die Erfassungseinrichtung (123) als ein Wandabschnitt einer Erfassungskammer (112) ausgeformt ist; und
Zusammenfügen (520) des ersten Halbleitersubstrats (101) und des zweiten Halbleitersubstrats (102), um zwischen dem ersten Halbleitersubstrat (101) und dem zweiten Halbleitersubstrat (102) die Einstellkammer (111) zum Einstellen einer Gaszusammensetzung des Messmediums (M), die Erfassungskammer (112) zum Erfassen des gasförmigen Analyten und einen Diffusionsabschnitt (113) zum Steuern einer Diffusion des Messmediums (M) zwischen der Einstellkammer (111) und der Erfassungskammer (112) zu erzeugen.

2. Verfahren (500) gemäß einem der Anspruch 1, **dadurch gekennzeichnet, dass** im Schritt (510) des Bearbeitens eine gemeinsame elektrische Signalleitung an der Einstellkammer (111) und der Erfassungskammer (112) zugewandt angeordneten Elektroden (221B, 222B, 223B) angeschlossen wird und eigene elektrische Signalleitungen an von der Einstellkammer (111) und der Erfassungskammer (112) abgewandt angeordneten Elektroden (221C, 222C, 223C) angeschlossen werden.

3. Verfahren (500) gemäß einem der vorangegangenen Ansprüche, **dadurch gekennzeichnet, dass** im Schritt (510) des Bearbeitens zumindest eine Temperiereinrichtung zum Temperieren der Festelektrolytschichten (221A, 222A, 223A) und/oder der Elektroden (221B, 221C, 222B, 222C, 223B, 223C) in einem Bereich des ersten Halbleitersubstrats (101) und/oder in einem Bereich des zweiten Halbleitersubstrats (102) angeordnet wird.

4. Verfahren (500) gemäß einem der vorangegangenen Ansprüche, **dadurch gekennzeichnet, dass** im Schritt (510) des Bearbeitens eine Auswerteeinrichtung in einem Bereich des ersten Halbleitersubstrats (101) und/oder in einem Bereich des zweiten Halbleitersubstrats (102) integriert wird.

5. Gassensorvorrichtung (100) zum Erfassen zumindest eines gasförmigen Analyten in einem Messmedium (M), wobei die Gassensorvorrichtung (100) folgende Merkmale aufweist:
ein erstes Halbleitersubstrat (101) und ein zweites Halbleitersubstrat (102), die unter Verwendung zumindest eines Trennprozesses und zumindest eines Beschichtungsprozesses erzeugte Ausnehmungsabschnitte (231, 232, 233, 234, 235, 236, 237, 238, 239), Festelektrolytschichten (221A, 222A, 223A) und Elektroden (221B, 221C, 222B, 222C, 223B, 223C) aufweisen, wobei das erste Halbleitersubstrat (101) und das zweite Halbleitersubstrat (102) zusammengefügt sind, wobei zwischen dem ersten Halbleitersubstrat (101) und dem zweiten Halbleitersubstrat (102) im zusammengefügten Zustand eine Einstellkammer (111) zum Einstellen einer Gaszusammensetzung des Messmediums (M), eine Erfassungskammer (112) zum Erfassen des gasförmigen Analyten und ein Diffusionsabschnitt (113) zum Steuern einer Diffusion des Messmediums (M) zwischen der Einstellkammer (111) und der Erfassungskammer (112) angeordnet sind, wobei an dem ersten Halbleitersubstrat (101) und/oder an dem zweiten Halbleitersubstrat (102) eine Einstelleinrichtung (121) mit einer ersten Festelektrolytschicht (221A) zwischen einem ersten Elektrodenpaar (221B, 221C) zum Einstellen einer Gaszusammensetzung des Messmediums (M) hinsichtlich eines Begleitgases, eine Bestimmungseinrichtung (122) mit einer zweiten Festelektrolytschicht (222A) zwischen einem zweiten Elektrodenpaar (222B, 222C) zum Bestimmen eines Gehalts des Begleitgases in dem Messmedium (M) und eine Erfassungseinrichtung (123) mit einer dritten Festelektrolytschicht (223A) zwischen einem dritten Elektrodenpaar (223B, 223C) zum Erfassen des gasförmigen Analyten erzeugt sind, wobei die Bestimmungseinrichtung (122), die Einstelleinrichtung (121) und die Erfassungseinrichtung (123) galvanisch voneinander getrennt angeordnet sind, sodass in einem zusammengefügten Zustand des ersten Halbleitersubstrats (101) und des zweiten Halbleitersubstrats (102) die Bestimmungseinrichtung (122) und die Einstelleinrichtung (121) als Wandabschnitte der Einstellkammer (111) ausgeformt sind und die Erfassungseinrichtung (123) als ein Wandabschnitt der Erfassungskammer (112) ausgeformt ist.

6. Gassensorvorrichtung (100) gemäß Anspruch 5, **dadurch gekennzeichnet, dass** das erste Halbleitersubstrat (101) einen ersten Ausnehmungsabschnitt (231) für die Einstellkammer (111), einen zweiten Ausnehmungsabschnitt (232) für die Erfassungskammer (112), einen dritten Ausnehmungsabschnitt (233) für den Diffusionsabschnitt (113) zwischen dem ersten Ausnehmungsabschnitt (231) und dem zweiten Ausnehmungsabschnitt (232), einen vierten Ausnehmungsabschnitt (234) für eine Zutrittsöffnung (114) zu der Einstellkammer (111) für das Messmedium (M), eine Einstelleinrichtung (121) mit einer ersten Festelektrolytschicht (221A) zwischen einem ersten Elektrodenpaar (221B, 221C) zum Einstellen einer Gaszusammensetzung des Messmediums (M) hinsichtlich eines Begleitgases, wobei die Einstelleinrichtung (121) als ein Wandabschnitt der Einstellkammer (111) in dem ersten Ausnehmungsabschnitt (231) ausgeformt ist, und einen fünften Ausnehmungsabschnitt (235) für die Einstelleinrichtung (121) aufweist, wobei das zweite Halbleitersubstrat (102) einen sechsten Ausnehmungsabschnitt (236) für die Einstellkammer (111), einen siebten Ausnehmungsabschnitt (237) für die Erfassungskammer (112), eine Bestimmungseinrichtung (122) mit einer zweiten Festelektrolytschicht (222A) zwischen einem zweiten Elektrodenpaar (222B, 222C) zum Bestimmen eines Gehalts eines Begleitgases in dem Messmedium (M), wobei die Bestimmungseinrichtung (122) als ein Wandabschnitt der Einstellkammer (111) in dem sechsten Ausnehmungsabschnitt (236) ausgeformt ist, eine Erfassungseinrichtung (123) mit einer dritten Festelektrolytschicht (223A) zwischen einem dritten Elektrodenpaar (223B, 223C) zum Erfassen des gasförmigen Analyten, wobei die Erfassungseinrichtung (123) als ein Wandabschnitt der Erfassungskammer (112) in dem siebten Ausnehmungsabschnitt (237) ausgeformt ist, einen achten Ausnehmungsabschnitt (238) für die Bestimmungseinrichtung (122) und einen neunten Ausnehmungsabschnitt (239) für die Erfassungseinrichtung (123) aufweist.

7. Verfahren (600) zum Erfassen zumindest eines gasförmigen Analyten in einem Messmedium (M), wobei das Verfahren (600) folgende Schritte aufweist:
Bereitstellen (610) einer Gassensorvorrichtung (100) gemäß einem der Ansprüche 5 bis 6;
Bestimmen (620) eines Gehalts eines Begleitgases des Messmediums (M) in der Einstellkammer (111);
Einstellen (630) einer Gaszusammensetzung des Messmediums (M) in der Einstellkammer (111) hinsichtlich des Begleitgases; und
Erfassen (640) des gasförmigen Analyten in dem in die Erfassungskammer (112) diffundierten Messmedium (M).

8. Computerprogramm, umfassend Befehle, die bei der Ausführung des Programms durch einen Computer diesen veranlassen, alle Schritte eines Verfahrens (500; 600) gemäß einem der Ansprüche 1 bis 4 oder 7 durchzuführen, anzusteuern und/oder umzusetzen.

9. Maschinenlesbares Speichermedium mit einem darauf gespeicherten Computerprogramm nach Anspruch 8.

## Claims

1. Method (500) for producing a gas sensor apparatus (100) for detecting at least one gaseous analyte in a measurement medium (M), wherein the method (500) comprises the following steps:
processing (510) a first semiconductor substrate (101) and a second semiconductor substrate (102) using at least one separating process and at least one coating process in order to produce cutout sections (231, 232, 233, 234, 235, 236, 237, 238, 239), solid-electrolyte layers (221A, 222A, 223A) and electrodes (221B, 221C, 222B, 222C, 223B, 223C) in the first semiconductor substrate (101) and the second semiconductor substrate (102), wherein in the step (510) of processing at the first semiconductor substrate (101) and/or at the second semiconductor substrate (102) there are produced a setting device (121) having a first solid-electrolyte layer (221A) between a first electrode pair (221B, 221C) for setting a gas composition of the measurement medium (M) with regard to an accompanying gas, a determining device (122) having a second solid-electrolyte layer (222A) between a second electrode pair (222B, 222C) for determining a content of the accompanying gas in the measurement medium (M), and a detection device (123) having a third solid-electrolyte layer (223A) between a third electrode pair (223B, 223C) for detecting the gaseous analyte, wherein the determining device (122), the setting device (121) and the detection device (123) are arranged in a manner electrically isolated from one another, such that in a joined-together state of the first semiconductor substrate (101) and the second semiconductor substrate (102), the determining device (122) and the setting device (121) are shaped as wall sections of a setting chamber (111) and the detection device (123) is shaped as a wall section of a detection chamber (112); and
joining (520) together the first semiconductor substrate (101) and the second semiconductor substrate (102) in order to produce between the first semiconductor substrate (101) and the second semiconductor substrate (102) the setting chamber (111) for setting a gas composition of the measurement medium (M), the detection chamber (112) for detecting the gaseous analyte and a diffusion section (113) for controlling a diffusion of the measurement medium (M) between the setting chamber (111) and the detection chamber (112).

2. Method (500) according to one of the Claim 1, **characterized in that** in step (510) of processing, a common electrical signal line is connected to electrodes (221B, 222B, 223B) arranged in a manner facing the setting chamber (111) and the detection chamber (112) and dedicated electrical signal lines are connected to electrodes (221C, 222C, 223C) arranged in a manner facing away from the setting chamber (111) and the detection chamber (112).

3. Method (500) according to either of the preceding claims, **characterized in that** in step (510) of processing, at least one temperature-regulating device for regulating the temperature of the solid-electrolyte layers (221A, 222A, 223A) and/or the electrodes (221B, 221C, 222B, 222C, 223B, 223C) is arranged in a region of the first semiconductor substrate (101) and/or in a region of the second semiconductor substrate (102).

4. Method (500) according to any of the preceding claims, **characterized in that** in step (510) of processing, an evaluation device is integrated in a region of the first semiconductor substrate (101) and/or in a region of the second semiconductor substrate (102).

5. Gas sensor apparatus (100) for detecting at least one gaseous analyte in a measurement medium (M), wherein the gas sensor apparatus (100) has the following features:
a first semiconductor substrate (101) and a second semiconductor substrate (102), which comprise cutout sections (231, 232, 233, 234, 235, 236, 237, 238, 239), solid-electrolyte layers (221A, 222A, 223A) and electrodes (221B, 221C, 222B, 222C, 223B, 223C) produced using at least one separating process and at least one coating process, wherein the first semiconductor substrate (101) and the second semiconductor substrate (102) are joined together, wherein between the first semiconductor substrate (101) and the second semiconductor substrate (102) in the joined-together state there are arranged a setting chamber (111) for setting a gas composition of the measurement chamber (M), a detection chamber (112) for detecting the gaseous analyte and a diffusion section (113) for controlling a diffusion of the measurement medium (M) between the setting chamber (111) and the detection chamber (112), wherein at the first semiconductor substrate (101) and/or at the second semiconductor substrate (102) there are produced a setting device (121) having a first solid-electrolyte layer (221A) between a first electrode pair (221B, 221C) for setting a gas composition of the measurement medium (M) with regard to an accompanying gas, a determining device (122) having a second solid-electrolyte layer (222A) between a second electrode pair (222B, 222C) for determining a content of the accompanying gas in the measurement medium (M), and a detection device (123) having a third solid-electrolyte layer (223A) between a third electrode pair (223B, 223C) for detecting the gaseous analyte, wherein the determining device (122), the setting device (121) and the detection device (123) are arranged in a manner electrically isolated from one another, such that in a joined-together state of the first semiconductor substrate (101) and the second semiconductor substrate (102), the determining device (122) and the setting device (121) are shaped as wall sections of a setting chamber (111) and the detection device (123) is shaped as a wall section of a detection chamber (112).

6. Gas sensor apparatus (100) according to Claim 5, **characterized in that** the first semiconductor substrate (101) comprises a first cutout section (231) for the setting chamber (111), a second cutout section (232) for the detection chamber (112), a third cutout section (233) for the diffusion section (113) between the first cutout section (231) and the second cutout section (232), a fourth cutout section (234) for an access opening (114) to the setting chamber (111) for the measurement medium (M), a setting device (121) having a first solid-electrolyte layer (221A) between a first electrode pair (221B, 221C) for setting a gas composition of the measurement medium (M) with regard to an accompanying gas, wherein the setting device (121) is shaped as a wall section of the setting chamber (111) in the first cutout section (231), and a fifth cutout section (235) for the setting device (121), wherein the second semiconductor substrate (102) comprises a sixth cutout section (236) for the setting chamber (111), a seventh cutout section (237) for the detection chamber (112), a determining device (122) having a second solid-electrolyte layer (222A) between a second electrode pair (222B, 222C) for determining a content of an accompanying gas in the measurement medium (M), wherein the determining device (122) is shaped as a wall section of the setting chamber (111) in the sixth cutout section (236), a detection device (123) having a third solid-electrolyte layer (223A) between a third electrode pair (223B, 223C) for detecting the gaseous analyte, wherein the detection device (123) is shaped as a wall section of the detection chamber (112) in the seventh cutout section (237), an eighth cutout section (238) for the determining device (122) and a ninth cutout section (239) for the detection device (123).

7. Method (600) for detecting at least one gaseous analyte in a measurement medium (M), wherein the method (600) comprises the following steps:
providing (610) a gas sensor apparatus (100) according to either of Claims 5 and 6;
determining (620) a content of an accompanying gas of the measurement medium (M) in the setting chamber (111) ;
setting (630) a gas composition of the measurement medium (M) in the setting chamber (111) with regard to the accompanying gas; and
detecting (640) the gaseous analyte in the measurement medium (M) that has diffused into the detection chamber (112).

8. Computer program comprising instructions which, when the program is executed by a computer, cause the latter to carry out, actuate and/or implement all the steps of a method (500; 600) according to any of Claims 1 to 4 or 7.

9. Machine-readable storage medium with a computer program according to Claim 8 stored thereon.

## Revendications

1. Procédé (500) pour fabriquer un arrangement détecteur de gaz (100) destiné à détecter au moins une substance à analyser sous forme gazeuse dans un fluide de mesure (M), le procédé (500) comprenant les étapes suivantes :
traitement (510) d'un premier substrat en semiconducteur (101) et d'un deuxième substrat en semiconducteur (102) en utilisant au moins un processus de séparation et au moins un processus de revêtement afin de produire des portions d'évidement (231, 232, 233, 234, 235, 236, 237, 238, 239), des couches d'électrolyte solide (221A, 222A, 223A) et des électrodes (221B, 221C, 222B, 222C, 223B, 223C) dans le premier substrat en semiconducteur (101) et le deuxième substrat en semiconducteur (102), dans l'étape (510) de traitement, un dispositif de réglage (121) pourvu d'une première couche d'électrolyte solide (221A) entre une première paire d'électrodes (221B, 221C) servant à régler une composition de gaz du fluide de mesure (M) du point de vue d'un gaz d'accompagnement, un dispositif de détermination (122) pourvu d'une deuxième couche d'électrolyte solide (222A) entre une deuxième paire d'électrodes (222B, 222C) servant à déterminer une teneur en le gaz d'accompagnement dans le fluide de mesure (M) et un dispositif de détection (123) pourvu d'une troisième couche d'électrolyte solide (223A) entre une troisième paire d'électrodes (223B, 223C) servant à détecter la substance à analyser sous forme gazeuse étant produits sur le premier substrat en semiconducteur (101) et/ou sur le deuxième substrat en semiconducteur (102), le dispositif de détermination (122), le dispositif de réglage (121) et le dispositif de détection (123) étant disposés de manière isolée galvaniquement les uns des autres, de sorte que dans un état assemblé du premier substrat en semiconducteur (101) et du deuxième substrat en semiconducteur (102), le dispositif de détermination (122) et le dispositif de réglage (121) sont façonnés en tant que portions de paroi d'une chambre de réglage (111) et le dispositif de détection (123) est façonné en tant qu'une portion de paroi d'une chambre de détection (112) ; et
assemblage (520) du premier substrat en semiconducteur (101) et du deuxième substrat en semiconducteur (102) afin de produire entre le premier substrat en semiconducteur (101) et le deuxième substrat en semiconducteur (102) la chambre de réglage (111) servant à régler une composition de gaz du fluide de mesure (M), la chambre de détection (112) servant à détecter la substance à analyser sous forme gazeuse et une portion de diffusion (113) servant à commander une diffusion du fluide de mesure (M) entre la chambre de réglage (111) et la chambre de détection (112).

2. Procédé (500) selon l'une de la revendication 1, **caractérisé en ce que** dans l'étape (510) de traitement, une ligne de signal électrique commune est raccordée aux électrodes (221B, 222B, 223B) qui sont disposées en faisant face à la chambre de réglage (111) et à la chambre de détection (112) et des lignes de signal électriques propres sont raccordées aux électrodes (221C, 222C, 223C) qui sont disposées opposées à la chambre de réglage (111) et à la chambre de détection (112).

3. Procédé (500) selon l'une des revendications précédentes, **caractérisé en ce que** dans l'étape (510) de traitement, au moins un dispositif d'équilibrage de température destiné à équilibrer la température des couches d'électrolyte solide (221A, 222A, 223A) et/ou des électrodes (221B, 221C, 222B, 222C, 223B, 223C) est disposé dans une zone du premier substrat en semiconducteur (101) et/ou dans une zone du deuxième substrat en semiconducteur (102).

4. Procédé (500) selon l'une des revendications précédentes, **caractérisé en ce que** dans l'étape (510) de traitement, un dispositif d'interprétation est intégré dans une zone du premier substrat en semiconducteur (101) et/ou dans une zone du deuxième substrat en semiconducteur (102).

5. Arrangement détecteur de gaz (100) destiné à détecter au moins une substance à analyser sous forme gazeuse dans un fluide de mesure (M), l'arrangement détecteur de gaz (100) possédant les caractéristiques suivantes :
un premier substrat en semiconducteur (101) et un deuxième substrat en semiconducteur (102), lesquels possèdent des portions d'évidement (231, 232, 233, 234, 235, 236, 237, 238, 239), des couches d'électrolyte solide (221A, 222A, 223A) et des électrodes (221B, 221C, 222B, 222C, 223B, 223C) produites en utilisant au moins un processus de séparation et au moins un processus de revêtement, le premier substrat en semiconducteur (101) et le deuxième substrat en semiconducteur (102) étant assemblés, une chambre de réglage (111) servant à régler une composition de gaz du fluide de mesure (M), une chambre de détection (112) servant à détecter la substance à analyser sous forme gazeuse et une portion de diffusion (113) servant à commander une diffusion du fluide de mesure (M) entre la chambre de réglage (111) et la chambre de détection (112) étant disposées entre le premier substrat en semiconducteur (101) et le deuxième substrat en semiconducteur (102) à l'état assemblé, un dispositif de réglage (121) pourvu d'une première couche d'électrolyte solide (221A) entre une première paire d'électrodes (221B, 221C) servant à régler une composition de gaz du fluide de mesure (M) du point de vue d'un gaz d'accompagnement, un dispositif de détermination (122) pourvu d'une deuxième couche d'électrolyte solide (222A) entre une deuxième paire d'électrodes (222B, 222C) servant à déterminer une teneur en le gaz d'accompagnement dans le fluide de mesure (M) et un dispositif de détection (123) pourvu d'une troisième couche d'électrolyte solide (223A) entre une troisième paire d'électrodes (223B, 223C) servant à détecter la substance à analyser sous forme gazeuse étant produits sur le premier substrat en semiconducteur (101) et/ou sur le deuxième substrat en semiconducteur (102), le dispositif de détermination (122), le dispositif de réglage (121) et le dispositif de détection (123) étant disposés de manière isolée galvaniquement les uns des autres, de sorte que dans un état assemblé du premier substrat en semiconducteur (101) et du deuxième substrat en semiconducteur (102), le dispositif de détermination (122) et le dispositif de réglage (121) sont façonnés en tant que portions de paroi de la chambre de réglage (111) et le dispositif de détection (123) est façonné en tant qu'une portion de paroi de la chambre de détection (112).

6. Arrangement détecteur de gaz (100) selon la revendication 5, **caractérisé en ce que** le premier substrat en semiconducteur (101) possède une première portion d'évidement (231) pour la chambre de réglage (111), une deuxième portion d'évidement (232) pour la chambre de détection (112), une troisième portion d'évidement (233) pour la portion de diffusion (113) entre la première portion d'évidement (231) et la deuxième portion d'évidement (232), une quatrième portion d'évidement (234) pour une ouverture d'accès (114) vers la chambre de réglage (111) pour le fluide de mesure (M), un dispositif de réglage (121) pourvu d'une première couche d'électrolyte solide (221A) entre une première paire d'électrodes (221B, 221C) servant à régler une composition de gaz du fluide de mesure (M) du point de vue d'un gaz d'accompagnement, le dispositif de réglage (121) étant façonné en tant qu'une portion de paroi de la chambre de réglage (111) dans la première portion d'évidement (231), et une cinquième portion d'évidement (235) pour le dispositif de réglage (121), le deuxième substrat en semiconducteur (102) possédant une sixième portion d'évidement (236) pour la chambre de réglage (111), une septième portion d'évidement (237) pour la chambre de détection (112), un dispositif de détermination (122) pourvu d'une deuxième couche d'électrolyte solide (222A) entre une deuxième paire d'électrodes (222B, 222C) servant à déterminer une teneur en un gaz d'accompagnement dans le fluide de mesure (M), le dispositif de détermination (122) étant façonné en tant qu'une portion de paroi de la chambre de réglage (111) dans la sixième portion d'évidement (236), un dispositif de détection (123) pourvu d'une troisième couche d'électrolyte solide (223A) entre une troisième paire d'électrodes (223B, 223C) servant à détecter la substance à analyser sous forme gazeuse, le dispositif de détection (123) étant façonné en tant qu'une portion de paroi de la chambre de détection (112) dans la septième portion d'évidement (237), une huitième portion d'évidement (238) pour le dispositif de détermination (122) et une neuvième portion d'évidement (239) pour le dispositif de détection (123).

7. Procédé (600) de détection d'au moins une substance à analyser sous forme gazeuse dans un fluide de mesure (M), le procédé (600) comprenant les étapes suivantes :
fourniture (610) d'un arrangement détecteur de gaz (100) selon l'une des revendications 5 et 6 ;
détermination (620) d'une teneur en un gaz d'accompagnement du fluide de mesure (M) dans la chambre de réglage (111) ;
réglage (630) d'une composition de gaz du fluide de mesure (M) dans la chambre de réglage (111) du point de vue du gaz d'accompagnement ; et
détection (640) de la substance à analyser sous forme gazeuse dans le fluide de mesure (M) diffusé dans la chambre de détection (112).

8. Programme informatique, comprenant des instructions qui, lors de l'exécution du programme par un ordinateur, amènent celui-ci à exécuter, commander et/ou mettre en oeuvre toutes les étapes d'un procédé (500 ; 600) selon l'une des revendications 1 à 4 ou 7.

9. Support d'enregistrement lisible par machine sur lequel est enregistré un programme informatique selon la revendication 8.
